Europäisches Patentamt

European Patent Office

Office européen des brevets

(11) Publication number: **0 302 095 B1**

# EUROPEAN PATENT SPECIFICATION

(45) Date of publication of patent specification: **28.04.93**

(51) Int. Cl.⁵: **C08K 11/00**, C08K 3/00, C08K 3/04, C08K 3/36, C08L 9/02, C08L 21/00

(21) Application number: **88901773.7**

(22) Date of filing: **17.02.88**

(86) International application number:
**PCT/AU88/00045**

(87) International publication number:
**WO 88/06171 (25.08.88 88/19)**

The file contains technical information submitted after the application was filed and not included in this specification

(54) **CARBONACEOUS AND/OR SILICEOUS FILLER FOR RUBBER.**

(30) Priority: **17.02.87 AU 425/87**

(43) Date of publication of application:
**08.02.89 Bulletin 89/06**

(45) Publication of the grant of the patent:
**28.04.93 Bulletin 93/17**

(84) Designated Contracting States:
**AT BE CH DE FR GB IT LI LU NL SE**

(56) References cited:

| | |
|---|---|
| **AU-A-37 115 /78** | **GB-A- 1 432 707** |
| **GB-A- 2 083 489** | **US-A- 4 107 383** |
| **US-A- 4 328 320** | **US-A- 4 496 674** |
| **US-A- 4 544 650** | **US-A- 4 555 448** |

(73) Proprietor: **Keogh, Boyd Terence
4 Adrian Place
Balgowlah Heights, N.S.W. 2093(AU)**

(72) Inventor: **Keogh, Boyd Terence
4 Adrian Place
Balgowlah Heights, N.S.W. 2093(AU)**

(74) Representative: **Day, Jeremy John et al
REDDIE & GROSE 16 Theobalds Road
London, WC1X 8PL (GB)**

EP 0 302 095 B1

EP 0 302 095 B1

## Description

This invention relates to an improved additive product and a process for its manufacture. The invention also relates to a further new product, of which the first mentioned product is a component, and, in turn, a process for its manufacture. The invention is extremely valuable in that it finds use for bagasse previously generally regarded as a waste material.

More specifically the product of the invention is useful as an additive to, and component of, a new rubber product. Its purpose and considerable value in this respect will be elaborated hereinafter.

It has been a problem to find suitable uses for bagasse (sugar cane residue). One such use is in the manufacture of paper and building materials. However, as a matter of developing practice, a common use has been as a fuel. The present invention achieves a substantial step forward in the useful disposal of bagasse.

GB-A-1432707 discloses a process for producing a highly reactive, highly amorphous, and anhydrous form of silicon oxide by heating organic plant material, particularly rice hulls, rice straw and horsetail weed (equisetum), in an oxidising atmosphere to remove organic matter therefrom. The product is used, inter alia as a filler for rubber.

This invention is an additive product, for incorporation into a rubber product as a filler or extender therefor, the said additive product being a carbonaceous and/or siliceous powder or fibrous material or required particle size derived from bagasse.

The invention provides a process for manufacturing an additive product, for incorporation into a rubber product as a filler or extender therefor, comprising the steps of processing bagasse to produce therefrom ash material comprising furnace ash and fly ash, and treating the fly ash to produce a carbonaceous and/or siliceous powder or fibrous material of required particle size.

The invention also provides a rubber product containing, as a filler or extender therefor, the additive product made by the process of the invention. The additive is a carbonaceous and/or siliceous powder or fibrous material which may be, but which is not necessarily, of fine particle size. The additive may further incorporate additional components such as processing aid(s) and/or coupling agent(s).

The invention includes within its ambit a process of manufacturing the foregoing rubber product characterised in that there is incorporated into rubber the above additive.

Other aspects and preferred features of the invention will appear hereafter.

Where it is more convenient or appropriate to do so, the additive product of the invention will be simply designed by either of its functional names, namely "filler" and "extender". It is to be understood that the expressions are thus used interchangeably.

The invention will now be described with reference to preferred performance features and specific example.

Typically the product may be manufactured from bagasse in accordance with the followed preferred procedure. The equipment used in carrying out this procedure is conventional.

Bagasse (typical analysis: sugar 3%, fibrous material 50%, water 47%) is fed to a sugar mill boiler where it burns to ash. The ash is made up of furnace ash and fly ash. The fly ash, because it sometimes tends to be carried away in the gas stream before combustion is complete, can have a carbon content which is significantly higher than the furnace ash.

As a first step, the fly ash is recovered. Recovery is usually effected by dust collectors of the multi-cyclone type. Any fly ash which escapes this recovery step may be collected in secondary cleaning equipment, which may take the form of a wet scrubber (alternatively a bag filter or electrostatic precipitator may be employed). In the case of a wet scrubber fine ash particles removed by the scrubber are directed in a slurry to a disposal pond from which they can be recovered for use.

The recovered fly ash is then passed to a density separator which extracts heavy silica particles. Any oversize and unburned or partially burned bagasse particles are extracted by screening. With these contaminants removed, the remaining ash material is then classified, for sample by classifying cyclones and/or air elutriation, and screened, in sequence as appropriate (but not necessarily in the order stated), to produce a first powder material, a second powder material, first fibre material, and a further fibre material. The first powder material is fine carbonaceous and/or siliceous powder, the particle size of which is up to 75 microns, for example 5-70 microns. The second powder material is larger in particle size (and thus able to be further ground as required) - but usually below about 350 microns. The first fibre material can be described as a medium carbonaceous fibre material, with particles up to 1000 microns in nominal size. The further fibre material is coarse and carbonaceous in nature (with a carbon content up to, for example, 85%). Further grinding of these materials, and screening, will produce the fine carbonaceous/siliceous powder as described.

2

A typical additive product of the invention has a carbon content of (20-40)%. A typical siliceous material content is 50 to 60% with the balance made up of aluminium oxide (5 to 15%) - (the combined carbon/siliceous/alumina content preferably exceeding 85%) - and other chemically combined elements not incompatible with rubber. It is stressed however that these ranges can be widely varied in accordance with the end use of the rubber product. For example a powder of low carbon content would typically contain less than 10% carbon (e.g. 1-3%) and a high content (e.g. 60-65 to 75%) silica.

Further, the additive product, which is typically a fine black powder when the carbon content is 20-40% as indicated above, may be of greyish hue when such carbon content is lower, and will be of more fibrous texture when fine particle size is not critical. It is odourless, substantially non-reactive (inert), has an extremely high melting point (in excess of 1000°C) and is substantially insoluble in water.

As a specific illustrative example an additive powder of the invention may be constituted as follows:

| | |
|---|---|
| carbon | 29.5% |
| $SiO_2$ | 53.2% |
| $Al_2O_3$ | 6.8% |
| other chemically combined rubber-compatible elements | 10.5% |

Turning now to the aforementioned important (rubber product) aspect of the invention, I have found, surprisingly, that the carbonaceous and/or siliceous powder of fine particle size as described above - and also carbonaceous and/or siliceous powders of larger (fibrous) particle size - possesses extremely valuable properties as a filler/extender for rubber compounds. This aspect of the invention will now be detailedly described.

By way of preamble, rubber products or compounds (the expressions are used interchangeably) are conveniently grouped as general purpose non-oil resistant; general purpose oil-resistant and specialty elastomers. The first group includes, for example, natural, SBR (styrene/butadiene), butyl and EPDM (ethylene propylene diene monomer) rubbers; the second includes (e.g.) nitrile, epichlorhydrin, chloroprene and urethane rubbers; the third includes (e.g.) silicone, polyacrylate rubbers and fluorocarbon rubbers. The use to which a product is to be put will naturally govern the category from which it is selected. For example, a rubber product intended for use as an oil seal will invariably be selected from the second group.

In the manufacture of rubber compounds, it is a normal practice to add reinforcing fillers, such as carbon blacks, to enhance such properties as tensile strength and elongation. These properties are important for the dynamic physical properties of rubber compounds. Cost can also be reduced by adding additional quantities of reinforcing fillers. However, beyond a certain point, such addition can become counter-productive.

A number of non-reinforcing fillers are also known in the art - such as soft clay, talc, and aluminium silicate. However the use of these fillers is usually limited to those rubber compounds not requiring high tensile strengths and elongation. Too much non-reinforcing filler is usually deleterious to these characteristics and also increases specific gravity. Hence their widespread use in high quality rubber compounding is severely restricted.

The importance of fillers in the rubber industry, and the criteria to be taken into account when choosing a filler for a particular purpose, are well documented in the literature of the art. In this respect, attention is directed to an article entitled "The Needs and Requirements of Fillers for Mechanical Rubber Products" by Larry L. Yarnell, The Gates Rubber Company, Denver, Colorado, U.S., published in the Plastics and Rubber Institute's News and Views of December 1987. The properties of rubber fillers and rubber compounds containing them are also discussed at length by Eli M. Dannenberg, in an article entitled "Overview of Fillers Used in Rubber" published in the above periodical.

Proceeding, my invention enables the loading (content) of non-rubber filler component, in a rubber compound, to be extended without reducing tensile strength to an unsatisfactory level. At the same time, satisfactory compression set and elongation are maintained. Apart from sustaining performance at a satisfactory level, substantial economic advantages can be gained (the overall cost of the rubber compound can be significantly reduced).

To express the above in somewhat more detail:

- Addition of the powder set forth above to a rubber compound, as a non-reinforcing extender in conjunction with conventional reinforcing fillers, will reduce tensile strength - but to a level not lower than required by the standards of the art. In addition it will not reduce elongation or compression set in the same way that known non-reinforcing mineral fillers do when used as extenders. Functional capability (with particular regard to such characteristics as elongation and compression set) is thus maintained.

- Incorporation of the inventive additive results in a significant increase in the proportion of non-rubber components in a rubber compound - with consequential reduction in the cost of the total materials used in a unit weight of such compound (whilst maintaining functional capability as stressed above).
- Unlike known mineral fillers which usually increase the plasticity of uncured rubbers, incorporation of the inventive additive makes no material difference to the plasticity of the rubber compound: this in turn means that processing problems are substantially avoided.
- A rubber compound, in which the inventive additive is incorporated, has a specific gravity significantly lower than a comparable compound with (the majority of) known mineral fillers. The consequence of this is that the volume cost of the overall rubber material is kept down, with resultant cost advantages to the manufacturer.
- Finally, unlike known fillers, the inventive additive is inert to (and does not interfere with) curing procedures to which the rubber compound is typically subjected.

The inventive additive may be present in amounts selected in accordance with situational requirements. As these amounts can vary widely - depending upon the intended use of (and the properties required in) the rubber product - it would be unduly restrictive to place quantitive limitations thereon. Generally speaking, for a wide variety of rubbers, the additive can be present in the range 15 to 120 phr, for example 50 to 100 phr ("phr" is the standard abbreviation for "parts per hundred parts of rubber"). However, in testimony of what is stated immediately above, it is envisaged that in certain applications - specifically general purpose non-oil resistant EPDM rubbers - considerably higher amounts (e.g. up to 200-300 phr) could be incorporated. Taken in conjunction with a conventional filler already present (e.g. a carbon black reinforcing filler), the total amount of filler may well exceed (sometimes substantially) the amount of rubber.

The conventional fillers (with which the inventive additive is usually to be associated) may be selected from any of the many fillers mentioned above. In addition, a rubber product of the invention may typically include further components as required. These components are selected from plasticizers, anti-oxidants, activators, processing aids, curatives, pigments (if required), anti-ozoneates and accelerators.

As indicated above, it is also a feature of this aspect of the invention for the additive product to be pre-treated or compounded with certain components, such as components facilitating dispersion into the rubber and coupling of a filler and rubber. These components include the aforementioned processing aids and coupling agents. The former may be exemplified by the compound known as Dispergator FL (trade name) - manufactured by Kittlitz Chemie GmbH and Co. KG. of Germany - and also by those mentioned heretofore. The coupling agents may be exemplified by the alkyl silanes, for example the compound known as Silanogran Si69GR (trade name) - manufactured as above.

The processing aids may be incorporated in a preferred amount within the range 2 to 10% of powder or fibrous material (e.g. 3%). A typical amount of coupling agent is likewise in the preferred range 2 to 10% (e.g. 5%).

This (rubber) aspect of the invention will now be further described with reference to the following specific Examples. Where these Examples incorporate conventional proprietary compositions which in the art are obtainable under, and normally identified by, trade names, each such composition is so identified - along with its respective function. In addition, where abbreviations are used (e.g. ASTM - designating American Society for Testing and Materials), such abbreviations are well known in the art.

## Example 1

A nitrile rubber product in accordance with the invention is constituted as follows:

| Components | Amount |
|---|---|
| NBR 32.50 polymer -nitrile rubber | 100.00 |
| N330 black (HAF) -carbon black high-reinforcing filler | 60.00 |
| Inventive additive | 100.00 |
| Dioctyl phthalate -plasticizer | 20.00 |
| Nocrack B (trade name) -anti-oxidant | 2.00 |
| Zinc oxide - activator | 5.00 |
| Stearic acid - activator | 2.00 |
| Sulfasan R (trade name) -curative | 1.00 |
| Mercapto benzothiazole sulphenamide (MBTS) -curative | 2.00 |
| Tetramethyl thiurea disulphide (TMTD) -curative | 2.50 |

The product was prepared from the foregoing components in conventional fashion. The rate of incorporation into nitrile rubber of the inventive additive, on an open mill, in fact exceeded that of carbon black, thus reducing batch mixing time.

The above rubber compound displays the following physical properties:

| | |
|---|---|
| Hardness, Shore A | 80 |
| Tensile strengh, psi (kPa) | 1090 (7520) |
| Elongation, % | 270 |
| Specific gravity | 1.383 |
| Heat Aging: 70 hours at 125C. : ASTM D573 | |
| Hardness change, points | + 11 |
| Tensile strength change, % | + 7 |
| Elongation change, % | -48 |

It is thus suitable for industrial products requiring oil and solvent resistance, but not a high degree of tensile strength. Such a product can be used in static applications such as some forms of oil seals, grommets, washers, bushes and dust covers. There are indeed many other general purpose static industrial applications for such a compound.

## Example 2

A series of tests, aimed at establishing the behavioural effects of various loadings of the inventive extender in a typical nitrile rubber compound were carried out. These tests served as a basis from which specific recipes for specific purposes could be selected.

EP 0 302 095 B1

|  | A (Control) | B | c | D | E |
|---|---|---|---|---|---|
| NBR 32/50 polymer -nitrile rubber | 100.00 | 100.00 | 100.00 | 100.00 | 100.00 |
| N774 carbon black -filler | 70.00 | 70.00 | 70.00 | 70.00 | 70.00 |
| Inventive -Additive |  | 25.00 | 50.00 | 75.00 | 100.00 |
| Corflex 880 (trade name) -processing aid | 5.00 | 5.00 | 5.00 | 5.00 | 5.00 |
| Flectol flakes (trade name) -antioxidant | 2.00 | 2.00 | 2.00 | 2.00 | 2.00 |
| Polyethylene name) ACT(trade - mold flow and release agent | 1.00 | 1.00 | 1.00 | 1.00 | 1.00 |
| Zinc oxide -activator | 10.00 | 10.00 | 10.00 | 10.00 | 10.00 |
| Stearic acid -activator | 1.00 | 1.00 | 1.00 | 1.00 | 1.00 |
| Sulphur MC (trade name) -curative | 0.50 | 0.50 | 0.50 | 0.50 | 0.50 |
| MBTS (see Example 1 above) | 3.00 | 3.00 | 3.00 | 3.00 | 3.00 |
| TMTD (see Example 1 above) | 2.00 | 2.00 | 2.00 | 2.00 | 2.00 |
| TOTAL | 194.50 | 219.50 | 244.50 | 269.50 | 294.50 |

```
Test Results:

1. Mooney (1+4)        25        26        35        40        50
100C.

2. Physical Properties

Hardness, IRHD        70        75        80        83        87

Tensile st'gth,    2620 (18080) 2230 (15390) 1760 (12140) 1540 (10630) 1290 (8900)
psi ( kPa )
```

|  | A (Control) | B | C | D | E |
|---|---|---|---|---|---|
| Elongation, % | 270 | 260 | 220 | 190 | 170 |
| Specific gravity | 1.253 | 1.305 | 1.357 | 1.393 | 1.439 |

3. Compression Set : 22 hours at 100C. : ASTM D395 Method B

|  | A (Control) | B | C | D | E |
|---|---|---|---|---|---|
| Compression set, % | 4 | 5 | 7 | 9 | 13 |

4. Heat Aging : 70 hours at 125C : ASTM D573

|  | A (Control) | B | C | D | E |
|---|---|---|---|---|---|
| Hardness change, pts | +9 | – | – | +4 | +3 |
| Tensile strength change, % | +8 | – | – | +2 | +3 |
| Elong'n change, % | -22 | – | – | -45 | -41 |

5. Fluid Aging: 70 hours at 125C in ASTM #1 oil : ASTM D471

|  | A (Control) | B | C | D | E |
|---|---|---|---|---|---|
| Hardness change, pts | +7 | – | – | +2 | +3 |
| Tensile strength change, % | +15 | – | – | -1 | +8 |
| Elong'n change, % | -6 | – | – | -26 | -16 |
| Volume change, % | -5.2 | – | – | -3.6 | -3.4 |

6. Fluid Aging: 70 hours at 125C in ASTM #3 oil : ASTM D471

|  | A (Control) | B | C | D | E |
|---|---|---|---|---|---|
| Hardness change, pts | -9 | – | – | -11 | -10 |
| Tensile strength change, % | -6 | – | – | -3 | -5 |
| Elong'n change, % | -13 | – | – | -6 | -11 |
| Volume change, % | +10.7 | – | – | +9.8 | +8.2 |

Note: The tests for heat aging and fluid aging were not carried out for compounds B and C as a matter of economy in laboratory expenses, and were limited to the

7

compounds D and E, to yield this particular data at the higher additive loadings. It was recognized that the heat aging and fluid aging tests could be repeated for each specific recipe for any particular purpose.

The foregoing results show that the compounds B and C can be used for industrial rubber products requiring oil and solvent resistance, and a relatively high degree of tensile strength for a variety of dynamic industrial applications. When selecting the final recipe for such compounds, minor adjustments (as required) will be made to the plasticizer to achieve the required hardness.

The results also indicate that compounds D and E containing 50 to 100 phr of additive (again with adjustment of the plasticizer as required to correct hardness) will be suitable for those industrial rubber products set forth in Example 1 above.

Example 3

The following compound was formulated:

| Components | Amount |
|---|---|
| Krynac 34.50 -nitrile rubber | 100.00 |
| SRF (N774) carbon -black - filler | 60.00 |
| Inventive additive | 40.00 |
| Dioctyl phthalate -plasticizer | 7.00 |
| TE80 (trade name) -processing aid | 1.00 |
| Flectol Flakes (trade name) - anti-oxidant | 2.00 |
| Zinc oxide - activator | 10.00 |
| Stearic acid - activator | 1.00 |
| Sulphur MC (trade name) -curative | 0.50 |
| MBTS - as above | 3.00 |
| TMTD - as above | 2.00 |
| TOTAL | 226.50 |

This compound was tested against SAE (Society of Automotive Engineers Inc.) requirements - specifically SAE specification J120a in respect of rubber "O" rings for automotive sealing applications. The results are set forth below.

Physical properties: Cured for 10 minutes at 175C.

|  | Measured Results | SAE J120a Specification |
|---|---|---|
| Hardness, Shore A | 74 | 65-75 |
| Tensile strength, psi $(kPa)$ | 1710 $(11800)$ | 1500 min |
| Elongation, % | 320 | 200-400 |
| Modulus @ 100% elongation | 463 | 450 min. |
| Heat Aging, 70 hrs at 125C. |  |  |
| Hardness change, points | +7 | +10 max. |
| Tensile strength change, % | +8 | -15 max. |
| Elongation change, % | -44 | -50 max. |
| Compression Set : 70 hours at 125C |  |  |
| Compression set ASTM specimen, % | 29 | 35 max. |
| Fluid Aging, 70 hrs at 150C. in ASTM #1 oil |  |  |
| Hardness change, points | +6 | -5 to +8 |
| Tensile strength, change % | +7 | -15 max. |
| Elongation change, % | -20 | -40 max. |
| Volume change, % | -4.7 | -5 to +5 |
| Fluid Aging, 70 hrs at 150C. in ASTM #3 oil |  |  |
| Hardness change, points | -9 | 0 to -15 |
| Tensile strength, change % | -9 | -30 max. |
| Elongation change, % | -15 | -40 max. |
| Volume change, % | +10.6 | +20 max. |

As can be seen, the physical properties of the compound conform in all respects with the requirements of the SAE specification. The compound is thus eminently suitable for high quality automotive seals and "O" rings.

9

Example 4

A series of test were carried out on rubber boot sole compounds as utilised by the armed forces (army specification 657B). The purpose of these tests was

(i) to initially determine the reinforcement afforded by specific amounts of a precipitated silica filler
(ii) to then determine the extent to which a compound containing the precipitated silica filler could be extended by the inventive additive.

In relation to (i), the compounds A to C below were formulated. The precipitated silica filler is identified by the trade name Ultrasil VN3.

|  | A | B | C |
|---|---|---|---|
| Krynac 34.50 – as above | 82.00 | 82.00 | 82.00 |
| Austrapol BR1220 – polybutadiene rubber | 18.00 | 18.00 | 18.00 |
| Stearic acid – as above. | 1.00 | 1.00 | 1.00 |
| Permanax OD (trade name) – anti-oxidant | 2.00 | 2.00 | 2.00 |
| Ozone wax 110 – anti-ozoneate | 2.80 | 2.80 | 2.80 |
| Crodamide SR – anti-oxidant | 1.80 | 1.80 | 1.80 |

|  | A | B | C |
|---|---|---|---|
| Zinc oxide - as above | 3.00 | 3.00 | 3.00 |
| Ultrasil VN3 - as above | 20.00 | 30.00 | 45.00 |
| Corflex 880 - as above | 15.00 | 15.00 | 15.00 |
| Pigments - optional | - | - | - |
| MC sulphur - as above | 1.00 | 1.00 | 1.00 |
| Mercapto benzo thiazole (MBT) - curative | 0.55 | 0.55 | 0.55 |
| MBTS - as above | 1.45 | 1.45 | 1.45 |
| Diphenyl guanadine (DPG) - accelerator | 0.80 | 0.80 | 0.80 |
| TMTD - as above | 0.60 | 0.60 | 0.60 |
| TOTAL | 150.00 | 160.00 | 175.00 |

Physical properties: cured 10 mins at 180C.

| | A | B | C |
|---|---|---|---|
| Hardness, IRHD | 48 | 52 | 66 |
| Tensile strength, psi ($kPa$) | 650 (4490) | 920 (6350) | 1330 (9180) |
| Elongation, % | 550 | 750 | 750 |

It is evident from the results for compounds A to C that, as the loading of the precipitated silica is increased (from 20 to 45 phr), the rate of increase in hardness accelerates and the rate of increase in elongation decelerates. It can therefore be concluded that, if the precipitated silica loading were increased further, the hardness would increase dramatically and the elongation would decrease substantially. Such conditions would produce a hard brittle compound which would be quite unsuitable for the purpose indicated.

11

Turning to (ii), compounds D to H were formulated by adding the inventive additive to compound C. The inventive additive in this Example is a low carbon powder of fine particle size manufactured from bagasse ash. The precipitated silica is as above.

|                              | D     | E     | F     | G     | H     |
|------------------------------|-------|-------|-------|-------|-------|
| Krynac 34.50 – as above      | 82.00 | 82.00 | 82.00 | 82.00 | 82.00 |
| Austrapol BR1220 – as above  | 18.00 | 18.00 | 18.00 | 18.00 | 18.00 |
| Stearic acid – as above      | 1.00  | 1.00  | 1.00  | 1.00  | 1.00  |
| Permanax OD – as above       | 2.00  | 2.00  | 2.00  | 2.00  | 2.00  |
| Ozone wax 110 – as above     | 2.80  | 2.80  | 2.80  | 2.80  | 2.80  |
| Crodamide SR – as above      | 1.80  | 1.80  | 1.80  | 1.80  | 1.80  |
| Zinc oxide – as above        | 3.00  | 3.00  | 3.00  | 3.00  | 3.00  |
| Ultrasil VN3 – as above      | 45.00 | 45.00 | 45.00 | 45.00 | 45.00 |
| Inventive Additive – as above| 15.00 | 30.00 | 45.00 | 60.00 | 75.00 |
| Corflex 880 – as above       | 15.00 | 15.00 | 15.00 | 15.00 | 15.00 |
| Pigments – as above          | –     | –     | –     | –     | –     |

|  | D | E | F | G | H |
|---|---|---|---|---|---|
| MC sulphur – as above | 1.00 | 1.00 | 1.00 | 1.00 | 1.00 |
| MBT – as above | 0.55 | 0.55 | 0.55 | 0.55 | 0.55 |
| MBTS – as above | 1.45 | 1.45 | 1.45 | 1.45 | 1.45 |
| DPG – as above | 0.80 | 0.80 | 0.80 | 0.80 | 0.80 |
| TMTD – as above | 0.60 | 0.60 | 0.60 | 0.60 | 0.60 |
| TOTAL | 190.00 | 205.00 | 220.00 | 235.00 | 250.00 |

Physical properties: cured 20 mins at 160C.

|  | D | E | F | G | H |
|---|---|---|---|---|---|
| Hardness, IRHD | 54 | 62 | 72 | 73 | 77 |
| Tensile strength, psi *(kPa)* | 1410 *(9730)* | 1200 *(8280)* | 1090 *(7520)* | 910 *(6280)* | 820 *(5660)* |
| Elongation, % | 720 | 700 | 680 | 680 | 660 |

Compound C cured for 20 mins at 160C.

Hardness, IRHD   66

Tensile strength, psi *(kPa)*   1360 *(9380)*

Elongation, %   660

In contrast to the foregoing, the results obtained with compounds D to H - where the loading of the inventive additive was increased whilst maintaining the precipitated silica filler at 45 phr - indicate a reversal of the trend. The rate of increase in hardness is decelerated, whilst the rate of decrease in elongation is arrested. By further extending the compounds in this way, it is thus possible to increase the total filler loading from 45 phr to 105 phr while still making a compound of acceptable physical properties (for use in army footwear, industrial work boots and the like). The economic and other advantages are obvious.

In a supplementary test, further compounds were formulated wherein the low carbon/fine particle size inventive bagasse ash powder is substituted by (i) a high carbon/fine particle size bagasse ash powder, (ii) a low carbon/coarse bagasse ash powder. In both instances, similarly satisfactory results were obtained.

In all of the foregoing tests, the incorporation of the inventive extender does not interfere with normal rubber curing procedures. This has been confirmed by standard rheographic testing procedures.

As long as the basic criteria as broadly defined are observed, any non-critical matters, falling therewithin, can be varied as required. On the whole, however, it will be seen that, by the invention, a substantial contribution to the rubber industry has been achieved.

Significant cost savings (e.g. of the order of 5-20% of the comparable cost of producing rubber compounds from rubber and traditional fillers) can be attained without deleterious effect on the required physical properties or performance specification of a wide variety of rubber compounds.

It will also be appreciated that, by providing an efficacious usage of what was previously waste material, further economic and environment-enhancing contributions have been made.

## Claims

1. A process for manufacturing an additive product, for incorporation into a rubber product as a filler or extender therefor, comprising the steps of processing bagasse to produce therefrom ash material comprising furnace ash and fly ash, and treating the fly ash to produce a carbonaceous and/or siliceous powder or fibrous material of required particle size.

EP 0 302 095 B1

**2.** A process as claimed in claim 1 which further comprises incorporating, into the additive product, one or more processing aids and/or coupling agents.

**3.** A process as claimed in any one of claims 1 or 2 wherein the powder material is of particle size up to 75 microns.

**4.** A process as claimed in any one of claims 1 to 3 wherein the carbonaceous content of the powder is within the range 20- 40% and the siliceous content of the powder is within the range of 50-60%.

**5.** A process as claimed in any one of claims 1 to 3 wherein the carbonaceous content is less than 10% and the siliceous content is above 60%.

**6.** A rubber product containing an additive product functioning as a filler or extender therefor, the additive product being a product manufactured in accordance with any one of claims 1 to 5.

**7.** A rubber product as claimed in claim 6 which includes a carbon black and/or other known filler.

**8.** A rubber product as claimed in claim 6 or 7 wherein the content of additive product is in the range 15 to 120 phr.

**9.** A rubber product as claimed in any one of claims 6 to 8 which additionally includes one or more further filler components selected from plasticizers, anti-oxidants, activators, processing aids, curatives, pigments, anti-ozoneates and accelerators.

**10.** A process for manufacturing a rubber product characterised in that there is incorporated into rubber an additive product manufactured in accordance with any one of claims 1 to 5.

**Patentansprüche**

**1.** Verfahren zur Herstellung eines Zuschlagstoffes zur Einarbeitung als Füllstoff oder Streckmittel in Kautschuk, umfassend die Schritte der Verarbeitung von Zuckerrohrrückständen zur Herstellung eines Aschenmaterials daraus, umfassend Ofenasche und Flugasche, und Behandlung der Flugasche zur Herstellung eines kohlenstoff- und/oder siliciumhaltigen pulvrigen oder fasrigen Materials mit der geforderten Teilchengröße.

**2.** Verfahren nach Anspruch 1, dadurch gekennzeichnet, daß man in den Zuschlagstoff zusätzlich eine oder mehrere Verarbeitungshilfsstoffe und/oder Haftmittel einarbeitet.

**3.** Verfahren nach irgendeinem der Ansprüche 1 oder 2, dadurch gekennzeichnet, daß das pulvrige Material eine Teilchengröße bis zu 75 $\mu$m aufweist.

**4.** Verfahren nach irgendeinem der Ansprüche 1 bis 3, dadurch gekennzeichnet, daß der Kohlenstoffgehalt des pulvrigen Materials Zwischen 20 und 40 % und der Siliciumgehalt Zwischen 50 und 60 % liegt.

**5.** Verfahren noch irgendeinem der Ansprüche 1 bis 3, dadurch gekennzeichnet, daß der Kohlenstoffgehalt weniger als 10 % und der Siliciumgehalt mehr als 60 % beträgt.

**6.** Kautschukprodukt enthaltend einen als Füllstoff oder Streckmittel dafür fungierenden Zuschlagstoff, wobei der Zuschlagstoff ein Produkt ist, das nach irgendeinem der Ansprüche 1 bis 5 hergestellt wurde.

**7.** Kautschukprodukt nach Anspruch 6, dadurch gekennzeichnet, daß es Ruß und/oder andere bekannte Füllstoffe enthält.

**8.** Kautschukprodukt nach Anspruch 6 oder 7, dadurch gekennzeichnet, daß der Gehalt an Zuschlagsstoff zwischen 15 und 120 Teilen je 100 Teile Kautschuk beträgt.

14

**9.** Kautschukprodukt nach irgendeinem der Ansprüche 6 bis 8, dadurch gekennzeichnet, daß es zusätzlich einen oder mehrere weitere Füllstoffkomponenten enthält, ausgewählt aus Weichmachern, Antioxydantien, Aktivatoren, Verarbeitungshilfen, Konservierungs- bzw. Alterungsschutzmitteln (Curative), Pigmenten, Anti-Ozonmitteln und Beschleunigern.

**10.** Verfahren zur Herstellung eines Kautschukproduktes, dadurch gekennzeichnet, daß man in den Kautschuk einen Zuschlagstoff einarbeitet, der nach einem der Ansprüche 1 bis 5 hergestellt wurde.

**Revendications**

**1.** Procédé pour la fabrication d'un produit additif, à incorporer dans un produit à base de caoutchouc en tant que charge ou diluant pour ce produit, comprenant les étapes de traitement d'une bagasse pour produire à une cendre à partir de celle-ci comprenant une cendre de four et une cendre volante, et de traitement de la cendre volante pour produire une poudre carbonée et/ou siliceuse ou un matériau fibreux de dimension particulaire requise.

**2.** Procédé suivant la revendication 1, qui comprend de plus l'incorporation dans le produit additif, d'un ou de plusieurs aides de traitement et/ou agents de couplage.

**3.** Procédé suivant l'une quelconque des revendications 1 ou 2, dans lequel le matériau en poudre présente une dimension particulaire allant jusqu'à 75 $\mu$m.

**4.** Procédé suivant l'une quelconque des revendications 1 à 3, dans lequel la teneur carbonée de la poudre est comprise entre 20 et 40% et la teneur siliceuse de la poudre est comprise entre 50 et 60%.

**5.** Procédé suivant l'une quelconque des revendications 1 à 3, dans lequel la teneur carbonée est inférieure à 10% et la teneur siliceuse est supérieure à 60%.

**6.** Produit à base de caoutchouc contenant un produit additif jouant le rôle de charge ou de diluant pour celui-ci, le produit additif étant un produit fabriqué suivant l'une quelconque des revendications 1 à 5.

**7.** Produit à base de caoutchouc suivant la revendication 6, qui comprend du noir de carbone et/ou une autre charge connue.

**8.** Produit à base de caoutchouc suivant les revendications 6 et 7, dans lequel la teneur en produit additif est de l'ordre de 15 à 120 parties pour cent.

**9.** Produit à base de caoutchouc suivant l'une quelconque des revendications 6 à 8, qui comprend de plus un ou plusieurs autres composants de charge choisis parmi des plastifiants, des anti-oxydants, des activateurs, des aides de traitement, des durcisseurs, des pigments, des anti-ozonéates et des accélérateurs.

**10.** Procédé pour fabriquer un produit à base de caoutchouc, caractérisé en ce qu'il est incorporé dans un caoutchouc un produit additif fabriqué suivant l'une quelconque des revendications 1 à 5.